# EUROPEAN PATENT APPLICATION

(11) **EP 3 737 179 A1**
(43) Date of publication of application: **11.11.2020**
(21) Application number: 18900228.0
(22) Date of filing: 10.01.2018
(51) Int. Cl.: H04W 72/04

(54) **DATA TRANSMISSION METHOD AND DEVICE, AND COMPUTER STORAGE MEDIUM**

(71) Applicant: GUANGDONG OPPO MOBILE TELECOMMUNICATIONS CORP., LTD., Wusha, Chang'an Dongguan, Guangdong 523860 (CN)
(72) Inventor: YANG, Ning, Dongguan, Guangdong 523860 (CN)
(74) Representative: Penza, Giancarlo
(86) International application number: PCT/CN2018/072048
(87) International publication number: WO 2019/136622

(57) **Abstract**

Disclosed are a data transmission method and device, and a computer storage medium. The method comprises: a first terminal transmitting identical data on at least one first link and a second link by utilizing a first time-frequency resource, wherein the first link is a link between the first terminal and a second terminal, and the second link is a link between the first terminal and a base station.

## Description

### Technical Field

The present invention relates to the technical field of wireless communication, in particular to a method for transmitting data and a device, and a computer storage medium.

### Background

With requirements of business development, requirements of business exchange between terminals are increasing day by day, and corresponding applications are increasing gradually. For example, due to an application scenario of data sharing caused by a local interactive game, local terminals may perform data sharing through direct communication between terminals, and cooperate to complete the game. For another example, due to an application scenario of data sharing caused by a local conference, the local terminals may perform data sharing, such as sharing of a conference file, a picture and a video, in the conference through direct communication between the terminals.

In a process of inter-terminal communication, part of user terminals may be located in a local area and within a coverage area of a Side Link (SL), while another part of the user terminals may be located in a non-local area and within a coverage area of a traditional cell, so when a terminal needs to send data to the local user terminal, it needs to send the data through an SL interface (an interface between the terminal and the terminal); and when a terminal needs to send data to a non-local user terminal, it needs to send the data through a Uu interface (an interface between the terminal and a base station).

In a normal case, a time-frequency resource used by the terminal on the SL interface is different from that used on the Uu interface. This resource usage mode is not conducive to saving resources and will cause waste of resources in some scenarios.

### Summary

In order to solve the above technical problems, embodiments of the present invention provide a method for transmitting data, and a device, and a computer storage medium.

A method for transmitting data provided by an embodiment of the present invention, includes: transmitting, by a first terminal, same data on at least one of a first link or a second link by utilizing a first time-frequency resource, wherein the first link is a link between the first terminal and a second terminal, and the second link is a link between the first terminal and a base station.

In an embodiment of the present invention, the method further includes: sending, by the first terminal, first information to the base station, wherein the first information indicates an amount of data which needs to be transmitted by the first terminal on the first link and the second link; and receiving, by the first terminal, a first time-frequency resource configured by the base station based on the first information.

In an embodiment of the present invention, sending, by the first terminal, the first information to the base station, includes: sending, by the first terminal, the first information to the base station through a Media Access Control (MAC) Control Element (CE); or, sending, by the first terminal, the first information to the base station through a Radio Resource Control (RRC) signaling.

In an embodiment of the present invention, sending, by the first terminal, the first information to the base station through the MAC CE, includes: sending, by the first terminal, the first information through a Buffer Status Report (BSR).

In an embodiment of the present invention, the method further includes: when sending the first information to the base station, sending, by the first terminal, fourth information to the base station, wherein the fourth information indicates a logical channel corresponding to the data, or a bearer of a service, or a type of a service.

In an embodiment of the present invention, the method further includes: when sending, the first information to the base station, sending, by the first terminal, fifth information to the base station, wherein the fifth information indicates information related to a characteristic of the service, such as a cycle, a QoS requirement, etc.

In an embodiment of the present invention, receiving, by the first terminal, the first time-frequency resource configured by the base station based on the first information, includes: receiving, by the first terminal the first time-frequency resource configured by the base station based on the first information through a physical-layer control signaling; or, receiving, by the first terminal the first time-frequency resource configured by the base station based on the first information through a MAC-layer control signaling; or, receiving, by the first terminal, the first time-frequency resource configured by the base station based on the first information through an RRC-layer control signaling.

In an embodiment of the present invention, the first time-frequency resource is a single transmission resource, or, the first time-frequency resource is a group of periodic transmission resources.

In an embodiment of the present invention, when the first time-frequency resource is the group of periodic transmission resources, the method further includes: receiving, by the first terminal, a time period and/or an effective time corresponding to the first time-frequency resource sent by the base station.

In an embodiment of the present invention, the method further includes: receiving, by the first terminal, a transmission parameter, configured by the base station based on second information and third information, corresponding to the first time-frequency resource, wherein the second information indicates link quality of the first link, and the third information indicates link quality of the second link; wherein, the transmission parameter includes at least one of : a Modulation and Coding Scheme (MCS), a transmitting power.

In an embodiment of the present invention, the method further includes: sending, by the first terminal, a first signal to the second terminal, to enable the second terminal to feed back the second information to the first terminal based on the first signal or sends the second information to the base station; when the first terminal receives the second information fed back by the second terminal based on the first signal, the first terminal may select to send the second information to the base station.

In an embodiment of the present invention, the method further includes: receiving, by the first terminal, a second signal sent by the second terminal at a first power, and determining the second information based on the second signal, the first terminal may select to send the second information to the base station.

In an implementation, the first power may be configured by the base station.

In an embodiment of the present invention, the method further includes: sending, by the first terminal, a third signal to the base station at a second power, to enable the base station to determine the third information based on the third signal.

In an implementation, the second power may be configured by the base station.

In an embodiment of the present invention, the method further includes: receiving, by the first terminal, multiple time-frequency resources sent by the base station; and selecting, by the first terminal, the first time-frequency resource used for transmitting the data from the multiple time-frequency resources.

In an implementation, the method further includes: before receiving the multiple time-frequency resources sent by the base station, sending, by the first terminal, fourth information to the base station, wherein the fourth information indicates a logical channel corresponding to the data, or a bearer of a service, or a type of a service.

In an implementation, the method further includes: before receiving the multiple time-frequency resources sent by the base station, sending, by the first terminal, fifth information to the base station, wherein the fifth information identifies information related to a characteristic of the service, such as a cycle, a QoS requirement, etc.

In an embodiment of the present invention, receiving, by the first terminal, the multiple time-frequency resources sent by the base station, includes: receiving, by the first terminal, through a MAC-layer control signaling, the multiple time-frequency resources sent by the base station; or, receiving, by the first terminal, through an RRC-layer control signaling, the multiple time-frequency resources sent by the base station.

In an embodiment of the present invention, the multiple time-frequency resources are configured by the base station based on the first information sent by the first terminal, wherein the first information indicates an amount of data which needs to be transmitted by the first terminal on the first link and the second link.

In an embodiment of the present invention, each time-frequency resource in the multiple time-frequency resources is a single transmission resource, or a group of periodic transmission resources. When the time-frequency resource is the group of periodic transmission resources, the method further includes: receiving, by the first terminal, a time period and/or an effective time corresponding to the time-frequency resource sent by the base station.

In an embodiment of the present invention, the method further includes: determining, by the first terminal, a transmission parameter corresponding to the first time-frequency resource based on second information and third information, wherein the second information indicates link quality of the first link, and the third information indicates link quality of the second link; or, receiving, by the first terminal, a range of a transmission parameter configured by the base station, such as a maximum value of the transmission parameter, and selecting, by the first terminal, an appropriate transmission parameter for data transmission in the range of the transmission parameter based on second information and third information; wherein, the transmission parameter includes at least one of: an MCS, a transmitting power.

In an embodiment of the present invention, the method further includes: sending, by the first terminal, a first signal to the second terminal, to enable the second terminal to feed back the second information to the first terminal based on the first signal.

In an embodiment of the present invention, the method further includes: receiving, by the first terminal, a second signal sent by the second terminal at a first power, and determining the second information based on the second signal.

In an embodiment of the present invention, the method further includes: sending, by the first terminal, a third signal to the base station at a second power, to enable the base station to determine the third information based on the third signal; and receiving, by the first terminal, the third information sent by the base station.

In an embodiment of the present invention, the method further includes: sending, by the first terminal, a transmission parameter corresponding to the first time-frequency resource to the second terminal through a control signaling on the first link, and sending the transmission parameter corresponding to the first time-frequency resource to the base station through a control signaling on the second link.

A device for transmitting data provided by an embodiment of the present invention includes: a data transmission unit, configured to transmit same data on at least one of a first link or a second link by utilizing a first time-frequency resource, wherein the first link is a link between a first terminal and a second terminal, and the second link is a link between the first terminal and a base station.

In an embodiment of the present invention, the device further includes: a first sending unit, configured to send first information to the base station, wherein the first information indicates an amount of data which needs to be transmitted by the first terminal on the first link and the second link; and a first receiving unit, configured to receive the first time-frequency resource configured by the base station based on the first information.

In an embodiment of the present invention, the first sending unit is configured to send the first information to the base station through a MAC CE; or, send the first information to the base station through an RRC signaling.

In an embodiment of the present invention, the first sending unit is configured to send the first information through a BSR.

In an embodiment of the present invention, the first sending unit is further configured to send fourth information to the base station, wherein the fourth information indicates a logical channel corresponding to the data, or a bearer of a service, or a type of a service.

In an embodiment of the present invention, the first receiving unit is configured to receive, through a physical-layer control signaling, the first time-frequency resource configured by the base station based on the first information; or, receive, through a MAC-layer control signaling, the first time-frequency resource configured by the base station based on the first information; or, receive, through an RRC-layer control signaling, the first time-frequency resource configured by the base station based on the first information.

In an embodiment of the present invention, the first time-frequency resource is a single transmission resource, or, the first time-frequency resource is a group of periodic transmission resources.

In an embodiment of the present invention, when the first time-frequency resource is the group of periodic transmission resources, the first receiving unit is further configured to receive a time period and/or an effective time corresponding to the first time-frequency resource sent by the base station.

In an embodiment of the present invention, the device further includes: a second receiving unit, configured to receive a transmission parameter corresponding to the first time-frequency resource configured by the base station based on second information and third information, wherein the second information indicates link quality of the first link, and the third information indicates link quality of the second link; and wherein, the transmission parameter includes at least one of: an MCS, a transmitting power.

In an embodiment of the present invention, the device further includes: a second sending unit, configured to send a first signal to the second terminal, to enable the second terminal to feed back the second information to the first terminal based on the first signal or sends the second information to the base station; a third receiving unit, configured to receive the second information fed back by the second terminal based on the first signal; and a third sending unit, configured to send the second information to the base station.

In an embodiment of the present invention, the device further includes: a fourth receiving unit, configured to receive a second signal sent by the second terminal at a first power, and determine the second information based on the second signal; and a fourth sending unit, configured to send the second information to the base station.

In an embodiment of the present invention, the device further includes: a fifth sending unit, configured to send a third signal to the base station at a second power, to enable the base station to determine the third information based on the third signal.

In an embodiment of the present invention, the device further includes: a fifth receiving unit, configured to receive multiple time-frequency resources sent by the base station; and a selecting unit, configured to select the first time-frequency resource used for transmitting the data from the multiple time-frequency resources.

In an embodiment of the present invention, the fifth receiving unit is configured to receive the multiple time-frequency resources sent by the base station through a MAC-layer control signaling; or, receive the multiple time-frequency resources sent by the base station through an RRC-layer control signaling.

In an embodiment of the present invention, the multiple time-frequency resources are configured by the base station based on the first information sent by the first terminal, wherein the first information indicates an amount of data needs to be transmitted by the first terminal on the first link and the second link.

In an embodiment of the present invention, each time-frequency resource in the multiple time-frequency resources is a single transmission resource, or a group of periodic transmission resources; wherein, when the time-frequency resource is a group of periodic transmission resources, the fifth receiving unit is further configured to receive a time period and/or an effective time corresponding to the time-frequency resource sent by the base station.

In an embodiment of the present invention, the device further includes: a determining unit, configured to determine a transmission parameter corresponding to the first time-frequency resource based on second information and third information, wherein the second information indicates link quality of the first link, and the third information indicates link quality of the second link; wherein, the transmission parameter includes at least one of: an MCS, a transmitting power.

In an embodiment of the present invention, the device further includes: a sixth sending unit, configured to send a first signal to the second terminal, to enable the second terminal to feed back the second information to the first terminal based on the first signal.

In an embodiment of the present invention, the device further includes: a sixth receiving unit, configured to receive a second signal sent by the second terminal at a first power, and determine the second information based on the second signal.

In an embodiment of the present invention, the device further includes: a seventh sending unit, configured to send a third signal to the base station at a second power, to enable the base station to determine the third information based on the third signal; and a seventh receiving unit, configured to receive the third information sent by the base station.

In an embodiment of the present invention, the device further includes: a notifying unit, configured to send a transmission parameter corresponding to the first time-frequency resource to the second terminal through a control signaling on the first link, and send the transmission parameter corresponding to the first time-frequency resource to the base station through a control signaling on the second link.

A computer storage medium provided by an embodiment of the present invention stores computer-executable instructions thereon, wherein the computer-executable instructions implement, when executed by a processor, the above method for transmitting data.

In technical solutions of the embodiments of the present invention, a first terminal transmits same data on at least one of a first link or a second link by utilizing a first time-frequency resource, wherein the first link is a link between the first terminal and a second terminal, and the second link is a link between the first terminal and a base station. By adopting the technical solutions of the embodiments of the present invention, in a case that data sent on the first link (corresponding to an SL interface) and the second link (corresponding to a Uu interface) are same, the first link and the second link may adopt a same time-frequency resource (i.e., the first time-frequency resource), thereby resources are saved, and data transmission efficiency is improved.

### Brief Description of Drawings

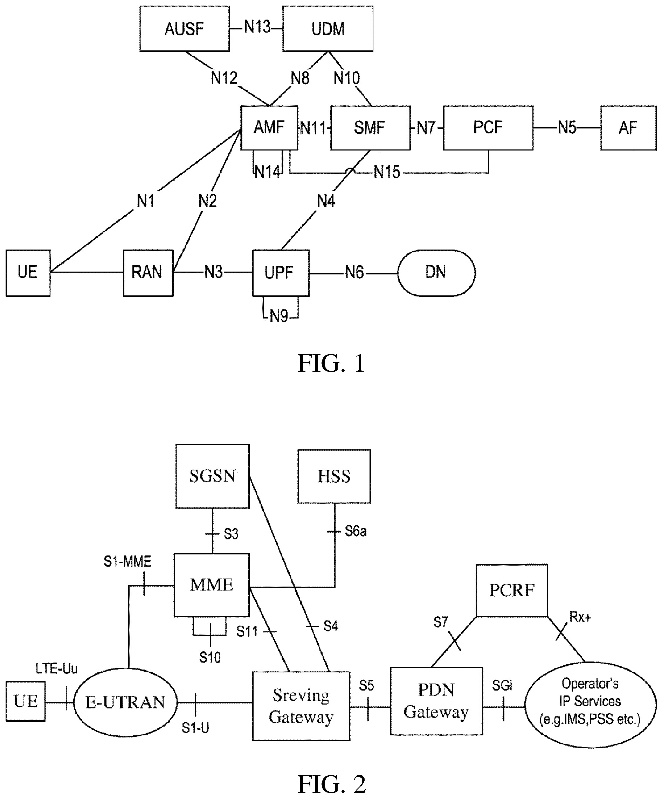

The drawings described herein are used for providing further understanding of the present invention and form a part of this application. Illustrative embodiments of the present invention and the description thereof are used for explaining the present invention and are not intended to unduly limit the present invention. FIG. 1 is a schematic diagram of system architecture of a 5G network according to an embodiment of the present invention.
FIG. 2 is a schematic diagram of system architecture diagram of a 4G network according to an embodiment of the present invention.
FIG. 3 is a schematic diagram one of a scenario of data sending according to an embodiment of the present invention.
FIG. 4 is a schematic diagram two of a scenario of data sending according to an embodiment of the present invention.
FIG. 5 is a flowchart one of a method for transmitting data according to an embodiment of the present invention.
FIG. 6 is a schematic diagram three of a scenario of data sending according to an embodiment of the present invention.
FIG. 7 is a schematic diagram of structure composition of a device for transmitting data according to an embodiment of the present invention.
FIG. 8 is a schematic diagram of structure composition of a computer device according to an embodiment of the present invention.

### Detailed Description

To understand features and technical contents of embodiments of the present invention in more detail, the implementation of the embodiments of the present invention will be described in detail below with reference to the drawings, which are used for reference only and are not intended to limit the embodiments of the present invention.

FIG. 1 is a schematic diagram of system architecture of a 5G network according to an embodiment of the present invention. As shown in FIG. 1, devices involved in a 5G network system include: a User Equipment (UE), a Radio Access Network (RAN), a User Plane Function (UPF), a Data Network (DN), a receiving Core Access and Mobility Management Function (AMF), a Session Management Function (SMF), a Policy Control function (PCF), an Application Function (AF), an Authentication Server Function (AUSF), Unified Data Management (UDM).

FIG. 2 is a schematic diagram of system architecture of a 4G network according to an embodiment of the present invention. As shown in FIG. 2, devices involved in a 4G network system include: a User Equipment (UE), an Evolved Universal Terrestrial Radio Access Network (E-UTRAN), a Mobility Management Entity (MME), a Serving GPRS Support Node (SGSN), a Home Subscriber Server (HSS), a Serving Gateway, a Packet Data Network Gateway (PDN Gateway), a Policy and Charging Rules Function (PCRF).

The above examples of FIGs. 1 and 2 are only examples of a network architecture for implementing the embodiments of the present invention, and the embodiments of the present invention are not limited to the network architecture described above in FIGs. 1 and 2.

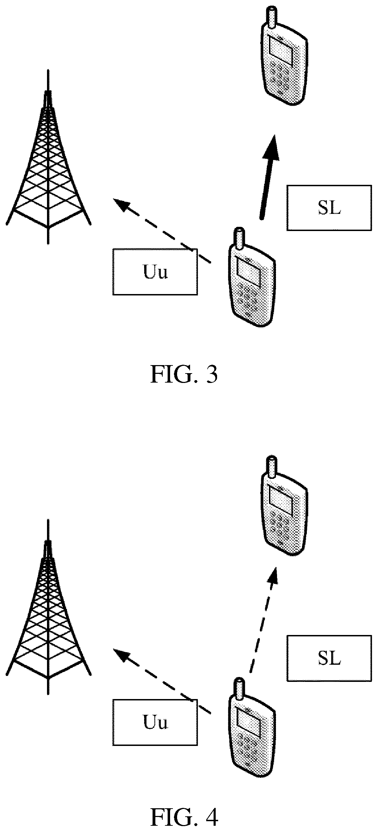

Referring to FIGs. 3 and 4, when a terminal needs to send same data to a local user terminal and a non-local user terminal, different time-frequency resources may be used for sending, or a same time-frequency resource may be used for sending. As shown in FIG. 3, the terminal uses different time-frequency resources to perform data sending on a Uu interface and an SL interface. As shown in FIG. 4, the terminal uses the same time-frequency resource to perform data sending on a Uu interface and an SL interface.

In a scenario of local data sending, data sent by a terminal on a Uu interface and an SL interface are same, so if the same time-frequency resource can be adopted for performing data sending, a resource utilization rate can be improved and a power of the terminal can be saved.

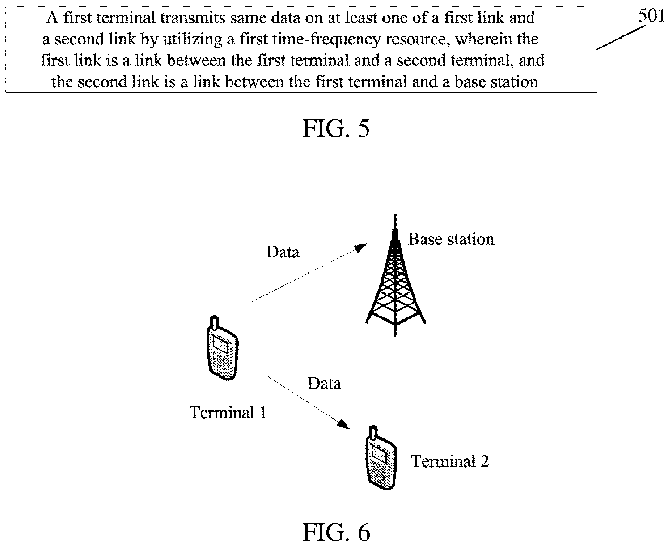

FIG. 5 is a flowchart one of a method for transmitting data according to an embodiment of the present invention. As shown in FIG. 5, the method for transmitting data includes following acts.

In act 501, a first terminal transmits same data on at least one of a first link or a second link by utilizing a first time-frequency resource, wherein the first link is a link between the first terminal and a second terminal, and the second link is a link between the first terminal and a base station.

Referring to FIG. 6, assuming that the first terminal is terminal 1, the second terminal is terminal 2, an interface corresponding to the first link is an SL interface, and an interface corresponding to the second link is a Uu interface. The terminal 1 uses a same time-frequency resource to send same data on the SL interface (i.e., the first link) and the Uu interface (i.e., the second link). Meanwhile, the base station and the terminal 2 perform data receiving on the time-frequency resource.

It should be understood that a quantity of the first link of the terminal in the embodiment of the present invention may be one or multiple. When the quantity of the first link is one, the first terminal sends data to one second terminal, and when the quantity of the first link is multiple, the first terminal sends data to multiple second terminals.

In an embodiment of the present invention, the first time-frequency resource used by the first terminal on the first link and the second link is determined by following modes.

Mode 1: the first terminal sends first information to the base station, wherein the first information indicates an amount of data which needs to be transmitted by the first terminal on the first link and the second link; the first terminal receives the first time-frequency resource configured by the base station based on the first information.

In an embodiment of the present invention, that the first terminal sends the first information to the base station, may be implemented by following modes.
1) The first terminal sends the first information to the base station through a MAC CE; or,
2) the first terminal sends the first information to the base station through an RRC signaling.

For the above mode 1), the first terminal sends the first information through a BSR. That is, the BSR may identify an amount of data which needs to be transmitted simultaneously on the Uu interface and the SL interface through an independent control domain (i.e., the MAC CE).

For the above mode 2), the first terminal sends the first information to the base station through an Information Element (IE) in an RRC layer.

In an implementation, when sending the first information to the base station, the first terminal also sends fourth information to the base station, wherein the fourth information indicates a logical channel corresponding to the data, or a bearer of a service, or a type of a service.

In an implementation, when sending the first information to the base station, the first terminal also sends fifth information to the base station, wherein the fifth information indicates information related to a characteristic of the service, such as a cycle, a QoS requirement, etc.

The base station may configure a first transmission resource for the terminal according to any one or more of the first information, the fourth information, and the fifth information.

In an embodiment of the present invention, that the first terminal receives the first time-frequency resource configured by the base station based on the first information, may be implemented by following modes.
1) The first terminal receives, through a physical-layer control signaling, the first time-frequency resource configured by the base station based on the first information; or, 2) the first terminal receives, through a MAC-layer control signaling, the first time-frequency resource configured by the base station based on the first information; or, 3) the first terminal receives, through an RRC-layer control signaling, the first time-frequency resource configured by the base station based on the first information.

In an embodiment of the present invention, the first time-frequency resource is a single transmission resource, or the first time-frequency resource is a group of periodic transmission resources. When the first time-frequency resource is the group of periodic transmission resources, the first terminal receives a time period and/or an effective time corresponding to the first time-frequency resource sent by the base station.

With the above solution, the first time-frequency resource, that is a physical time domain resource position and a physical frequency domain resource position corresponding to the first time-frequency resource, may be determined. In addition, the embodiment of the present invention yet further determines a transmission parameter corresponding to the first time-frequency resource, wherein the transmission parameter includes at least one of: an MCS, a transmitting power.

In an implementation, the first terminal receives a transmission parameter corresponding to the first time-frequency resource configured by the base station based on second information and third information, wherein the second information indicates link quality of the first link, and the third information indicates link quality of the second link.

In the embodiment of the present invention, the base station may acquire the second information by following modes.
1) The first terminal sends a first signal to the second terminal, so that the second terminal feeds back the second information to the first terminal based on the first signal or sends the second information to the base station; when the first terminal receives the second information fed back by the second terminal based on the first signal, it may select to send the second information to the base station. Or, 2) the first terminal receives a second signal sent by the second terminal at a first power, and determines the second information based on the second signal, then the first terminal may select to send the second information to the base station.

In an implementation, the first power may be configured by the base station.

In an embodiment of the present invention, the base station may acquire the third information by a following mode: the first terminal sends a third signal to the base station at a second power, so that the base station determines the third information based on the third signal.

In an implementation, the second power may be configured by the base station.

In a specific implementation, the first signal, the second signal and the third signal may be a Sounding Reference Signal (SRS).

After acquiring the link quality of the first link and the link quality of the second link, the base station configures an MCS and/or a transmitting power for the first terminal to ensure that data sent by the first terminal can reach to the base station and the second terminal. The first terminal sends the data to the base station and the second terminal on the first time-frequency resource according to the MCS and/or the transmitting power configured by the base station.

Mode 2: the first terminal receives multiple time-frequency resources sent by the base station; the first terminal selects the first time-frequency resource used for transmitting the data from the multiple time-frequency resources.

In an implementation, the method further includes: before receiving the multiple time-frequency resources sent by the base station, the first terminal sends fourth information to the base station, wherein the fourth information indicates a logical channel corresponding to the data, or a bearer of a service, or a type of a service.

In an implementation, the method further includes: before receiving the multiple time-frequency resources sent by the base station, the first terminal sends fifth information to the base station, wherein the fifth information identifies information related to a characteristic of the service, such as a cycle, a QoS requirement, etc.

In an implementation, the multiple time-frequency resources are configured by the base station based on the first information sent by the first terminal, wherein the first information indicates an amount of data which needs to be transmitted by the first terminal on the first link and the second link. Further, the base station may configure the multiple time-frequency resources for the terminal according to any one or more of the first information, the fourth information, and the fifth information.

Here, the base station designates a group of time-frequency resources for the first terminal to transmit data. In an implementation, the first terminal randomly select the first time-frequency resource used for transmitting data from the group of time-frequency resources.

In an embodiment of the present invention, that the first terminal receives the multiple time-frequency resources sent by the base station, may be implemented by following modes.
1) The first terminal receives, through a MAC-layer control signaling, the multiple time-frequency resources sent by the base station; or, 2) the first terminal receives, through an RRC-layer control signaling, the multiple time-frequency resources sent by the base station.

In an embodiment of the present invention, each time-frequency resource in the multiple time-frequency resources is a single transmission resource, or a group of periodic transmission resources. When the time-frequency resource is a group of periodic transmission resources, the first terminal receives a time period and/or an effective time corresponding to the time-frequency resource sent by the base station.

With the above solution, the first time-frequency resource, that is, a physical time domain resource position and a physical frequency domain resource position corresponding to the first time-frequency resource, may be determined. In addition, the embodiment of the present invention yet further determines a transmission parameter corresponding to the first time-frequency resource, wherein the transmission parameter includes at least one of: an MCS, a transmit power.

In an implementation, the first terminal determines the transmission parameter corresponding to the first time-frequency resource based on second information and third information, wherein the second information indicates link quality of the first link, and the third information indicates link quality of the second link. Or, the first terminal receives a range of a transmission parameter configured by the base station, such as a maximum value of the transmission parameter, and the first terminal selects an appropriate transmission parameter for data transmission in the range of the transmission parameter based on second information and third information.

In an embodiment of the present invention, that the first terminal may acquire the second information by following modes.
1) The first terminal sends a first signal to the second terminal, so that the second terminal feeds back the second information to the first terminal based on the first signal.
2) The first terminal receives a second signal sent by the second terminal at a first power, and determines the second information based on the second signal.

In an embodiment of the present invention, the first terminal may acquire the third information by a following mode: the first terminal sends a third signal to the base station at a second power, so that the base station determines the third information based on the third signal; the first terminal receives the third information sent by the base station.

In a specific implementation, the first signal, the second signal and the third signal may be an SRS.

For the mode 2, since the first terminal autonomously selects the MCS and/or the transmitting power, the first terminal may send a transmission parameter corresponding to the first time-frequency resource to the second terminal through a control signaling (i.e., a sidelink control signaling) on the first link, and send the transmission parameter corresponding to the first time-frequency resource to the base station through a control signaling (i.e., an uplink control signaling) on the second link.

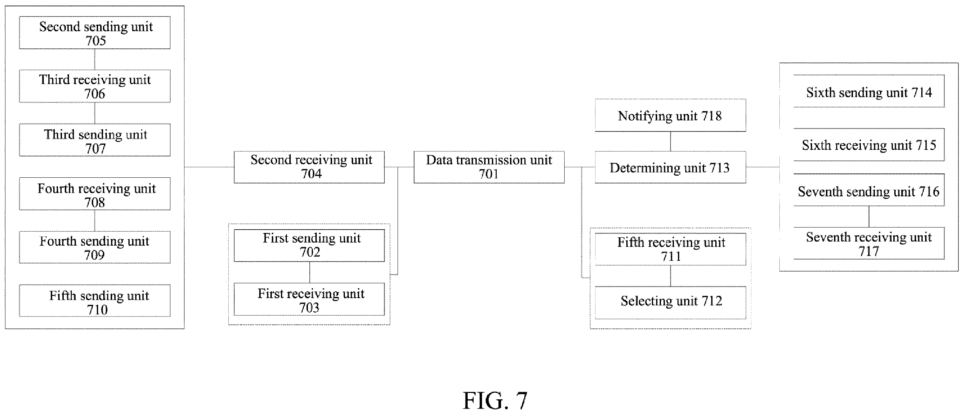

FIG. 7 is a schematic diagram of the structure composition of an device for transmitting data according to an embodiment of the present invention. As shown in FIG. 7, the device for transmitting data includes: a data transmission unit 701, configured to transmit same data on at least one of a first link or a second link by utilizing a first time-frequency resource, wherein the first link is a link between the first terminal and a second terminal, and the second link is a link between the first terminal and a base station.

In an implementation, the device further includes: a first sending unit 702, configured to send first information to the base station, wherein the first information indicates an amount of data which needs to be transmitted by the first terminal on the first link and the second link; and a first receiving unit 703, configured to receive the first time-frequency resource configured by the base station based on the first information.

In an implementation, the first sending unit 702 is configured to send first information to the base station through a MAC CE; or, send first information to the base station through an RRC signaling.

In an implementation, the first sending unit 702 is configured to send the first information through a BSR.

In an implementation, the first sending unit 702 is further configured to send fourth information to the base station, wherein the fourth information indicates a logical channel corresponding to the data, or a bearer of a service, or a type of a service.

In an implementation, the first sending unit 702 is further configured to sends, when sending the first information to the base station, fifth information to the base station, wherein the fifth information indicates information related to a characteristic of the service, such as a cycle, a QoS requirement, etc.

In an implementation, the first receiving unit 703 is configured to receive, through a physical-layer control signaling, the first time-frequency resource configured by the base station based on the first information; or, receive, through a MAC-layer control signaling, the first time-frequency resource configured by the base station based on the first information; or, receive, through an RRC-layer control signaling, the first time-frequency resource configured by the base station based on the first information.

In an implementation, the first time-frequency resource is a single transmission resource, or, the first time-frequency resource is a group of periodic transmission resources.

In an implementation, when the first time-frequency resource is the group of periodic transmission resources, the first receiving unit 703 is further configured to receive a time period and/or an effective time corresponding to the first time-frequency resource sent by the base station.

In an implementation, the device further includes: a second receiving unit 704, configured to receive a transmission parameter corresponding to the first time-frequency resource configured by the base station based on second information and third information, wherein the second information indicates link quality of the first link, and the third information indicates link quality of the second link; wherein, the transmission parameter includes at least one of: an MCS, a transmitting power.

In an implementation, the device further includes: a second sending unit 705, configured to send a first signal to the second terminal, so that the second terminal feeds back second information to the first terminal based on the first signal or sends the second information to the base station; a third receiving unit 706, configured to receive second information fed back by the second terminal based on the first signal; and a third sending unit 707, configured to send the second information to the base station.

In an implementation, the device further includes: a fourth receiving unit 708, configured to receive a second signal sent by the second terminal at a first power, and determine the second information based on the second signal; and a fourth sending unit 709, configured to send the second information to the base station.

In an implementation, the first power may be configured by the base station.

In an implementation, the device further includes: a fifth sending unit 710, configured to send a third signal to the base station at a second power, so that the base station determines the third information based on the third signal.

In an implementation, the second power may be configured by the base station.

In an implementation, the device further includes: a fifth receiving unit 711, configured to receive multiple time-frequency resources sent by the base station; and a selecting unit 712, configured to select the first time-frequency resource used for transmitting the data from the multiple time-frequency resources.

In an implementation, the fifth receiving unit 711 is configured to receive the multiple time-frequency resources sent by the base station through a MAC-layer control signaling; or, receive the multiple time-frequency resources sent by the base station through an RRC-layer control signaling.

In an implementation, the multiple time-frequency resources are configured by the base station based on the first information sent by the first terminal, wherein the first information indicates an amount of data which needs to be transmitted by the first terminal on the first link and the second link.

In an implementation, each time-frequency resource in the multiple time-frequency resources is a single transmission resource, or a group of periodic transmission resources; wherein, when the time-frequency resource is a group of periodic transmission resources, the fifth receiving unit 711 is further configured to receive a time period and/or an effective time corresponding to the time-frequency resource sent by the base station.

In an implementation, the device further includes: a determining unit 713, configured to determine a transmission parameter corresponding to the first time-frequency resource based on second information and third information, wherein the second information indicates link quality of the first link, and the third information indicates link quality of the second link; or, receive a range of a transmission parameter configured by the base station, such as a maximum value of the transmission parameter, and select, by the first terminal, an appropriate transmission parameter for data transmission in the range of the transmission parameter based on the second information and the third information.

The transmission parameter includes at least one of: an MCS, a transmitting power.

In an implementation, the device further includes: a sixth sending unit 714, configured to send a first signal to the second terminal, so that the second terminal feeds back the second information to the first terminal based on the first signal.

In an implementation, the device further includes: a sixth receiving unit 715, configured to receive a second signal sent by the second terminal at a first power, and determine the second information based on the second signal.

In an implementation, the device further includes: a seventh sending unit 716, configured to send a third signal to the base station at a second power, so that the base station determines the third information based on the third signal; and a seventh receiving unit 717, configured to receive the third information sent by the base station.

In an implementation, the device further includes: a notifying unit 718, configured to send a transmission parameter corresponding to the first time-frequency resource to the second terminal through a control signaling on the first link, and send the transmission parameter corresponding to the first time-frequency resource to the base station through a control signaling on the second link.

Those skilled in the art should understand that the implementation functions of the various units in the device for transmitting data shown in FIG. 7 may be understood with reference to the relevant description of the aforementioned method for transmitting data. The functions of the various units in the device for transmitting data shown in FIG. 7 may be implemented by a program running on a processor or by a specific logic circuit.

The above device for transmitting data in the embodiments of the present invention may also be stored in a computer readable storage medium, when it is implemented in the form of a software function module and sold or used as an independent product. Based on this understanding, the technical solutions in the embodiments of the present invention, in essence, or the part contributing to the prior art, may be embodied in the form of a software product stored in a storage medium, including several instructions for causing a computer device (which may be a personal computer, a server, or a network device, etc.) to perform all or part of the methods described in various embodiments of the present invention. The aforementioned storage medium includes a U disk, a mobile hard disk, a read-only memory (ROM), a magnetic disk or an optical disk, and another media capable of storing program codes. Thus, the embodiments of the present invention are not limited to any specific combination of hardware and software.

Correspondingly, an embodiment of the present invention also provides a computer storage medium in which computer-executable instructions are stored, wherein the computer-executable instructions implement, when executed by a processor, the above method for transmitting data according to the embodiments of the present invention.

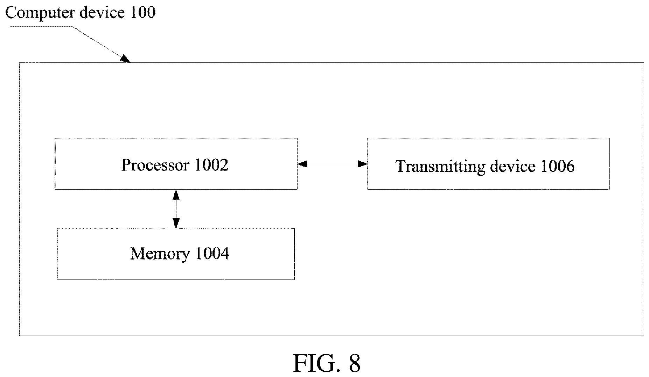

FIG. 8 is a schematic diagram of the structure composition of a computer device according to an embodiment of the present invention, wherein the computer device may be a terminal. As shown in FIG. 8, a computer device 100 may include one or more (only one is shown in the figure) processors 1002 (the processor 1002 may include, but is not limited to, a processing device such as a Micro Controller Unit (MCU), a Field Programmable Gate Array (FPGA), etc.), a memory 1004 configured to store data, and a transmitting device 1006 configured to perform communication functions. One of ordinary skill in the art may understand that the structure shown in FIG. 8 is only schematic and does not limit the structure of the above electronic device. For example, the computer device 100 may also include more or fewer components than those shown in FIG. 8, or have a different configuration than that shown in FIG. 8.

The memory 1004 may be configured to store software programs and modules of application software, such as program instructions/modules corresponding to the method in the embodiment of the present invention. The processor 1002 executes various functional applications and data processing, i.e., implements the above method, by running the software programs and the modules stored in the memory 1004. The memory 1004 may include a high-speed random access memory and may also include a non-volatile memory such as one or more magnetic storage devices, a flash memory, or another non-volatile solid-state memory. In some examples, the memory 1004 may further include memories remotely disposed with respect to the processor 1002, wherein these remote memories may be connected to the computer device 100 through a network. Examples of the above network include, but are not limited to, the Internet, an intranet, a local area network, a mobile communication network, and combinations thereof.

The transmitting device 1006 is configured to receive or send data via a network. Specific examples of the above network may include a wireless network provided by a communication provider of the computer device 100. In one example, the transmitting device 1006 includes one Network Interface Controller (NIC), which may be connected to another network device through a base station so that the transmitting device 1006 may communicate with the Internet. In an example, the transmitting device 1006 may be a Radio Frequency (RF) module, which is configured to communicate with the Internet through a wireless mode.

The technical solutions described in the embodiments of the present invention may be combined arbitrarily with each other, without conflict.

In several embodiments provided by the present invention, it should be understood that the disclosed methods and the intelligent device may be implemented in another mode. The device embodiment described above is only illustrative, for example, the division of the units is only a logical function division, and there may be other division modes in an actual implementation. For example, multiple units or components may be combined or integrated into another system, or some features may be ignored or not executed. In addition, the mutual coupling or direct coupling or communication connection between various components shown or discussed may be indirect coupling or communication connection through some interface, device or unit, and may be electrical, mechanical or in other forms.

The unit described as a separate component may or may not be physically separated, and the component shown as a unit may or may not be a physical unit, i.e., it may be located in one place or may be distributed over multiple network units. Some or all of the units may be selected according to practical needs to achieve a purpose of the embodiments.

In addition, various functional units in various embodiments of the present invention may be all integrated in one second processing unit, or various units may be separately taken as one unit, or two or more units may be integrated in one unit. The above integrated units may be implemented in a form of hardware or in a form of hardware plus software functional units.

What are described above are merely exemplary embodiments of the present invention, but the protection scope of the present invention is not limited thereto. Any person skilled in the art may easily conceive variations or substitutions within the technical scope disclosed by the present invention, which should be included within the protection scope of the present invention.

## Claims

1. A method for transmitting data, comprising:
transmitting, by a first terminal, same data on at least one of a first link or a second link by utilizing a first time-frequency resource, wherein the first link is a link between the first terminal and a second terminal, and the second link is a link between the first terminal and a base station.

2. The method according to claim 1, wherein the method further comprises:
sending, by the first terminal, first information to the base station, wherein the first information indicates an amount of data which needs to be transmitted by the first terminal on the first link and the second link; and
receiving, by the first terminal, the first time-frequency resource configured by the base station based on the first information.

3. The method according to claim 2, wherein sending, by the first terminal, the first information to the base station, comprises:
sending, by the first terminal, the first information to the base station through a Media Access Control (MAC) Control Element (CE); or,
sending, by the first terminal, the first information to the base station through a Radio Resource Control (RRC) signaling.

4. The method according to claim 3, wherein sending, by the first terminal, the first information to the base station through the MAC CE, comprises:
sending, by the first terminal, the first information through a Buffer Status Report (BSR).

5. The method according to any one of claims 2 to 4, wherein the method further comprises:
when sending the first information to the base station, sending, by the first terminal, fourth information to the base station, wherein the fourth information indicates a logical channel corresponding to the data, or a bearer of a service, or a type of a service.

6. The method according to any one of claims 2 to 5, wherein receiving, by the first terminal, the first time-frequency resource configured by the base station based on the first information, comprises:
receiving, by the first terminal, the first time-frequency resource configured by the base station based on the first information through a physical-layer control signaling; or,
receiving, by the first terminal, the first time-frequency resource configured by the base station based on the first information through a MAC-layer control signaling; or,
receiving, by the first terminal, the first time-frequency resource configured by the base station based on the first information through an RRC-layer control signaling.

7. The method according to any one of claims 2 to 6, wherein,
the first time-frequency resource is a single transmission resource; or,
the first time-frequency resource is a group of periodic transmission resources.

8. The method according to claim 7, wherein when the first time-frequency resource is the group of periodic transmission resources, the method further comprises:
receiving, by the first terminal, a time period and/or an effective time corresponding to the first time-frequency resource sent by the base station.

9. The method according to any one of claims 1 to 8, wherein the method further comprises:
receiving, by the first terminal, a transmission parameter, configured by the base station based on second information and third information, corresponding to the first time-frequency resource wherein the second information indicates link quality of the first link, and the third information indicates link quality of the second link;
wherein, the transmission parameter comprises at least one of: a Modulation and Coding Scheme (MCS) or a transmitting power.

10. The method according to claim 9, wherein the method further comprises:
sending, by the first terminal, a first signal to the second terminal to enable the second terminal to feed back the second information to the first terminal based on the first signal or sends the second information to the base station;
when the first terminal receives the second information fed back by the second terminal based on the first signal, sending, by the first terminal, the second information to the base station.

11. The method according to claim 9, wherein the method further comprises:
receiving, by the first terminal, a second signal sent by the second terminal at a first power, determining the second information based on the second signal, and sending the second information to the base station.

12. The method according to any one of claims 9 to 11, wherein the method further comprises:
sending, by the first terminal, a third signal to the base station at a second power to enable the base station to determine the third information based on the third signal.

13. The method according to claim 1, wherein the method further comprises:
receiving, by the first terminal, a plurality of time-frequency resources sent by the base station; and
selecting, by the first terminal, the first time-frequency resource used for transmitting the data from the plurality of time-frequency resources.

14. The method according to claim 13, wherein receiving, by the first terminal, the plurality of time-frequency resources sent by the base station, comprises:
receiving, by the first terminal, through a MAC-layer control signaling, the plurality of time-frequency resources sent by the base station; or,
receiving, by the first terminal, through an RRC-layer control signaling, the plurality of time-frequency resources sent by the base station.

15. The method according to claim 13 or 14, wherein the plurality of time-frequency resources are configured by the base station based on first information sent by the first terminal, wherein the first information indicates an amount of data which needs to transmitted by the first terminal on the first link and the second link.

16. The method according to any one of claims 13 to 15, wherein each time-frequency resource in the plurality of time-frequency resources is a single transmission resource, or a group of periodic transmission resources;
wherein, when the time-frequency resource is the group of periodic transmission resources, the method further comprises:
receiving, by the first terminal, a time period and/or an effective time corresponding to the time-frequency resource sent by the base station.

17. The method according to any one of claims 13 to 16, wherein the method further comprises:
determining, by the first terminal, a transmission parameter corresponding to the first time-frequency resource based on second information and third information, wherein the second information indicates link quality of the first link, and the third information indicates link quality of the second link;
wherein, the transmission parameter comprises at least one: an MCS, a transmitting power.

18. The method according to claim 17, wherein the method further comprises:
sending, by the first terminal, a first signal to the second terminal to enable the second terminal to feed back the second information to the first terminal based on the first signal.

19. The method according to claim 17, wherein the method further comprises:
receiving, by the first terminal, a second signal sent by the second terminal at a first power, and determining the second information based on the second signal.

20. The method according to claim 17, wherein the method further comprises:
sending, by the first terminal, a third signal to the base station at a second power to enable the base station to determine the third information based on the third signal; and
receiving, by the first terminal, the third information sent by the base station.

21. The method according to any one of claims 17 to 20, wherein the method further comprises:
sending, by the first terminal, a transmission parameter corresponding to the first time-frequency resource to the second terminal through a control signaling on the first link, and sending the transmission parameter corresponding to the first time-frequency resource to the base station through a control signaling on the second link.

22. A device for transmitting data, comprising:
a data transmission unit, configured to transmit same data on at least one of a first link or a second link by utilizing a first time-frequency resource, wherein the first link is a link between the first terminal and a second terminal, and the second link is a link between the first terminal and a base station.

23. The device according to claim 22, wherein the device further comprises:
a first sending unit, configured to send first information to the base station, wherein the first information indicates an amount of data which needs to be transmitted by the first terminal on the first link and the second link; and
a first receiving unit, configured to receive the first time-frequency resource configured by the base station based on the first information.

24. The device according to claim 23, wherein the first sending unit is configured to send the first information to the base station through a Media Access Control (MAC) Control Element (CE); or, send the first information to the base station through a Radio Resource Control (RRC) signaling.

25. The device according to claim 24, wherein the first sending unit is configured to send the first information through a Buffer Status Report (BSR).

26. The device according to any one of claims 23 to 25, wherein the first sending unit is further configured to send fourth information to the base station, wherein the fourth information indicates a logical channel corresponding to the data, or a bearer of a service, or a type of a service.

27. The device according to any one of claims 23 to 26, wherein the first receiving unit is configured to receive the first time-frequency resource configured by the base station based on the first information through a physical-layer control signaling; or, receive the first time-frequency resource configured by the base station based on the first information through a MAC layer control signaling,; or, receive the first time-frequency resource configured by the base station based on the first information through an RRC layer control signaling.

28. The device according to any one of claims 23 to 27, wherein,
the first time-frequency resource is a single transmission resource; or,
the first time-frequency resource is a group of periodic transmission resources.

29. The device according to claim 28, wherein when the first time-frequency resource is the group of periodic transmission resources, the first receiving unit is further configured to receive a time period and/or an effective time corresponding to the first time-frequency resource sent by the base station.

30. The device according to any one of claims 22 to 29, wherein the device further comprises:
a second receiving unit, configured to receive a transmission parameter, configured by the base station based on second information and third information, corresponding to the first time-frequency resource, wherein the second information indicates link quality of the first link, and the third information indicates link quality of the second link;
wherein, the transmission parameter comprises at least one of: a Modulation and Coding Scheme (MCS) or a transmitting power.

31. The device according to claim 30, wherein the device further comprises:
a second sending unit, configured to send a first signal to the second terminal to enable the second terminal to feed back the second information to the first terminal based on the first signal or sends the second information to the base station;
a third receiving unit, configured to receive the second information fed back by the second terminal based on the first signal; and
a third sending unit, configured to send the second information to the base station.

32. The device according to claim 30, wherein the device further comprises:
a fourth receiving unit, configured to receive a second signal sent by the second terminal at a first power, and determine the second information based on the second signal; and
a fourth sending unit, configured to send the second information to the base station.

33. The device according to any one of claims 30 to 32, wherein the device further comprises:
a fifth sending unit, configured to send a third signal to the base station at a second power, to enable the base station to determine the third information based on the third signal.

34. The device according to claim 22, wherein the device further comprises:
a fifth receiving unit, configured to receive a plurality of time-frequency resources sent by the base station; and
a selecting unit, configured to select the first time-frequency resource used for transmitting the data from the plurality of time-frequency resources.

35. The device according to claim 34, wherein the fifth receiving unit is configured to receive the plurality of time-frequency resources sent by the base station through a MAC-layer control signaling; or, receive the plurality of time-frequency resources sent by the base station through an RRC-layer control signaling.

36. The device according to claim 34 or 35, wherein the plurality of time-frequency resources are configured by the base station based on first information sent by the first terminal, wherein the first information indicates an amount of data which needs to be transmitted by the first terminal on the first link and the second link.

37. The device according to any one of claims 34 to 36, wherein each time-frequency resource in the plurality of time-frequency resources is a single transmission resource, or a group of periodic transmission resources;
wherein, when the time-frequency resource is the group of periodic transmission resources, the fifth receiving unit is further configured to receive a time period and/or an effective time corresponding to the time-frequency resource sent by the base station.

38. The device according to any one of claims 34 to 37, wherein the device further comprises:
a determining unit, configured to determine a transmission parameter corresponding to the first time-frequency resource based on second information and third information, wherein the second information indicates link quality of the first link, and the third information indicates link quality of the second link;
wherein, the transmission parameter comprises at least one of: an MCS, a transmitting power.

39. The device according to claim 38, wherein the device further comprises:
a sixth sending unit, configured to send a first signal to the second terminal to enable the second terminal to feed back the second information to the first terminal based on the first signal.

40. The device according to claim 38, wherein the device further comprises:
a sixth receiving unit, configured to receive a second signal sent by the second terminal at a first power, and determine the second information based on the second signal.

41. The device according to claim 38, wherein the device further comprises:
a seventh sending unit, configured to send a third signal to the base station at a second power to enable the base station to determine the third information based on the third signal; and
a seventh receiving unit, configured to receive the third information sent by the base station.

42. The device according to any one of claims 38 to 41, wherein the device further comprises:
a notifying unit, configured to send a transmission parameter corresponding to the first time-frequency resource to the second terminal through a control signaling on the first link, and send the transmission parameter corresponding to the first time-frequency resource to the base station through a control signaling on the second link.

43. A computer storage medium, comprising: computer-executable instructions stored thereon, wherein the computer-executable instructions implement, when executed by a processor, acts of the method according to any one of claims 1 to 21.
